# EUROPEAN PATENT APPLICATION

(11) **EP 4 561 039 A1**
(43) Date of publication of application: **28.05.2025**
(21) Application number: 23917190.3
(22) Date of filing: 20.11.2023
(51) Int. Cl.: H04M 1/72436

(54) **COMMUNICATION METHOD, SYSTEM AND TERMINAL DEVICE**

(30) Priority: 20.01.2023 CN 202310143730
(71) Applicant: Huawei Technologies Co., Ltd., Shenzhen, Guangdong 518129 (CN)
(72) Inventor: HU, Yingfeng, Shenzhen, Guangdong 518129 (CN); WEI, Yuanyou, Shenzhen, Guangdong 518129 (CN); LI, Zhaoyang, Shenzhen, Guangdong 518129 (CN)
(74) Representative: MERH-IP Matias Erny Reichl Hoffmann Patentanwälte PartG mbB
(86) International application number: PCT/CN2023/132660
(87) International publication number: WO 2024/152722

(57) **Abstract**

Embodiments of this application provide a communication method and system, and a terminal device, to provide an implementation allowing more information content to be input in a BeiDou short message. In this method, the first terminal device has no network service. In response to a first operation instruction of a user on a first interface, the first terminal device displays a second interface, where the second interface includes M text labels, M is a positive integer, the first interface is used for information editing, and the first interface includes recipient information. In response to a selection operation of the user for at least one text label in the M text labels, the first terminal device displays a third interface, where the third interface includes message preview information obtained based on the at least one text label. In response to a second operation instruction on the third interface, the first terminal device sends information to a recipient based on the message preview information, and displays a fourth interface, where the fourth interface indicates an information interaction interface, between the first terminal device and the recipient, displayed after the information is sent.

## Description

### CROSS-REFERENCE TO RELATED APPLICATIONS

This application claims priority to Chinese Patent Application No. 202310143730.6, filed with the China National Intellectual Property Administration on January 20, 2023, and entitled "COMMUNICATION METHOD AND SYSTEM, AND TERMINAL DEVICE", which is incorporated herein by reference in its entirety.

### TECHNICAL FIELD

This application relates to the field of terminal technologies, and in particular, to a communication method and system, and a terminal device.

### BACKGROUND

With development and progress of technologies, functions of terminal devices are gradually improved and enriched. Take mobile phones as an example. Currently, more mobile phones have a BeiDou short message communication service function, and may provide communication assurance for a user.

Due to a rate limitation on satellite uplink communication, a message capacity for sending and receiving messages through a satellite is currently limited to some extent. For example, in some implementations, a BeiDou short message can transmit a maximum of 400-bit (bit) content. In addition, a recipient number of the message, position information, and information content input by the user occupy a message capacity of the BeiDou short message. Therefore, there is a large limitation on information content that may be actually input by the user in the BeiDou short message.

### SUMMARY

This application provides a communication method and system, and a terminal device, to provide a user with an implementation allowing more information content to be input in a BeiDou short message, so that more application scenarios can be satisfied, and user experience can be improved.

According to a first aspect, embodiments of this application provide a communication method. The method may be applied to a first terminal device. The first terminal device has no network service, and the method includes: in response to a first operation instruction of a user on a first interface, displaying a second interface, where the second interface includes M text labels, M is a positive integer, the first interface is used for information editing, and the first interface includes recipient information; in response to a selection operation of the user for at least one text label in the M text labels, displaying a third interface, where the third interface includes message preview information obtained based on the at least one text label; and in response to a second operation instruction on the third interface, sending information to a recipient based on the message preview message, and displaying a fourth interface, where the fourth interface indicates an information interaction interface, between the first terminal device and the recipient, displayed after the information is sent.

In this method, based on a preconfigured mapping relationship, a common character can be mapped to code that occupies less character space. In this way, in a scenario in which the user needs to send a BeiDou short message when a mobile phone has no network service, the user selects a text label from text labels provided by the mobile phone, to edit information. The text label occupies less character space than an input character, so that more effective information content can be transmitted in the limited BeiDou short message. According to the method, more application scenarios can be expanded, and a use limitation on sending the BeiDou short message by the user can be reduced, so that user experience can be improved.

In a possible design, the first interface further includes a first control, and the first operation instruction indicates a touch operation of the user on the first control. The first operation instruction is used for switching from displaying the first interface to displaying the second interface; or the first operation instruction is used for displaying the second interface in a preset display area on the first interface.

In this design, the first terminal device may display the preconfigured text label in a plurality of forms. The preconfigured text label is displayed, so that the user can send more text content in a scenario of editing the information and selecting the text label.

In a possible design, the first interface further includes a second control. The second control indicates that when the second control is selected for displaying, the information carries position information of the first terminal device.

In this design, in a scenario in which the user sends the BeiDou short message, less character content may be input by the user when the user edits the information. The text label is preconfigured, and the preconfigured text label is mapped to preset code, so that the user can input more text content in the BeiDou short message.

In a possible design, the sending information to a recipient based on the message preview message includes: searching a stored mapping relationship for preset code corresponding to the at least one text label, where the mapping relationship indicates preset code corresponding to the M text labels; and encoding the information based on the preset code, and sending encoded information to the recipient. It may be understood that character space occupied by the preset code is less than character space occupied by a character corresponding to the text label.

In this design, a common text label is mapped to preset code, so that character content included in the common text label can occupy less character space than character content directly input during information editing, and more effective information content can be transmitted in the limited BeiDou short message. According to the method, more application scenarios can be expanded, and a use limitation on sending the BeiDou short message by the user can be reduced, so that user experience can be improved.

In a possible design, the method further includes: detecting a third operation instruction for a user-defined label included in the second interface, where the third operation instruction indicates that the user edits the user-defined label; and in response to the third operation instruction, displaying the user-defined label as an edited text label, and updating a first mapping relationship to a second mapping relationship, where the first mapping relationship indicates a correspondence between the user-defined label and first preset code, the second mapping relationship indicates a correspondence between the edited text label and second preset code, and the second preset code includes the first preset code and device identifier code of the first terminal device.

In this design, a user-defined label scenario may be further provided, so that flexibility of the preconfigured text label can be improved, and more possible application scenarios can be expanded.

In a possible design, the method further includes: when the first terminal device has a network service, uploading the second mapping relationship to a server. In this design, the user defines a text label in the first terminal device, and the mapping relationship between the user-defined label and the preset code is uploaded to the server. In this case, when the user selects the user-defined label, the server may decode the preset code, so that information content can be accurately parsed out.

In a possible design, the message preview information is displayed through a widget or a text box. In this design, the preview information may be displayed to the user in a plurality of implementations, so that the user modifies edited content.

In a possible design, the information is sent, in a form of BeiDou short message through a satellite, to a second terminal device bound to the recipient information.

In a possible design, the third interface further includes character prompt information, and the character prompt information indicates a quantity of remaining inputtable characters. Text content included in the at least one text label has a first quantity of characters, and occupies character space of a second quantity of characters in the information. The first quantity of characters is greater than the second quantity of characters. The method further includes: in response to the selection operation, updating the character prompt information. In this design, the first terminal device updates the quantity of remaining inputtable characters in real time, so that the user can be prompted to input more content.

According to a second aspect, an embodiment of this application further provides a communication system. The system includes a first terminal device, a satellite, a server, and a second terminal device.

The first terminal device is configured to encode information edited by a user, and send encoded information to the satellite. The information edited by the user includes recipient information and at least one text label selected by the user from M text labels displayed by the first terminal device, and M is a positive integer.

The satellite is configured to receive the encoded information from the first terminal device, and send the encoded information based on the recipient information indicated in the encoded information.

The server is configured to receive the encoded information from the satellite, decode the encoded information, and send the decoded information content to the second terminal device; or the server is configured to receive the encoded information from the satellite, and send the encoded information to the second terminal device based on the recipient information indicated in the encoded information, where the second terminal device is a terminal device bound to the recipient information.

The second terminal device is configured to: when receiving the information content from the server, display the information content; or when receiving the encoded information from the server, decode the encoded information, and display the decoded information content.

According to a third aspect, an embodiment of this application further provides a terminal device. The terminal device includes a memory and one or more processors. The memory is configured to store computer program code. The computer program code includes computer instructions. When the computer instructions are executed by the processor, the terminal device is enabled to perform the method performed by the first terminal device in any possible design of the first aspect.

According to a fourth aspect, an embodiment of this application further provides a terminal device. The terminal device includes modules/units for performing the method in any possible design of the first aspect. These modules/units may be implemented by hardware, or may be implemented by hardware executing corresponding software.

According to a fifth aspect, a computer-readable storage medium is provided. The computer-readable medium stores a computer program (which may also be referred to as code or instructions). When the computer program is run on a computer, the computer is enabled to perform the method in any possible design of the first aspect.

According to a sixth aspect, a computer program product is provided. The computer program product includes a computer program (which may also be referred to as code or instructions). When the computer program is run, a computer is enabled to perform the method in any possible design of the first aspect.

According to a seventh aspect, a graphical user interface on a terminal device is further provided. The terminal device has a display, one or more memories, and one or more processors. The one or more processors are configured to execute one or more computer programs stored in the one or more memories. The graphical user interface includes a graphical user interface displayed when the terminal device performs any possible implementation in the first aspect of embodiments of this application.

According to an eighth aspect, this application further provides a chip. The chip is configured to read a computer program stored in a memory, to perform the method performed by a terminal device in any one of the foregoing aspects and the possible designs of the foregoing aspects.

According to a ninth aspect, this application further provides a chip system. The chip system includes a processor configured to support a computer apparatus in implementing the method performed by a terminal device in any one of the foregoing aspects and the possible designs of the foregoing aspects. In a possible design, the chip system further includes a memory, and the memory is configured to store a program and data that are necessary for the computer apparatus. The chip system may include a chip, or may include a chip and another discrete device.

It should be noted that, for beneficial effects of the designs of the terminal device provided in the second aspect to the ninth aspect of embodiments of this application, refer to beneficial effects of any possible design of the first aspect. Details are not described herein again.

### BRIEF DESCRIPTION OF DRAWINGS

FIG. 1A to FIG. 1C are a diagram of interfaces of a BeiDou short message;
FIG. 2 is a diagram of a hardware architecture of a terminal device according to an embodiment of this application;
FIG. 3 is a block diagram of a software system architecture of a terminal device according to an embodiment of this application;
FIG. 4A to FIG. 4D are a diagram 1 of interfaces of a communication method according to an embodiment of this application;
FIG. 5A and FIG. 5B are a diagram 2 of interfaces of a communication method according to an embodiment of this application;
FIG. 6A to FIG. 6D are a diagram 3 of interfaces of a communication method according to an embodiment of this application;
FIG. 7 is a diagram 1 of a scenario of a communication method according to an embodiment of this application;
FIG. 8A and FIG. 8B are a correspondence diagram of a mapping relationship in a communication method according to an embodiment of this application;
FIG. 9 is a diagram 2 of a scenario of a communication method according to an embodiment of this application;
FIG. 10 is a schematic flowchart 1 of a communication method according to an embodiment of this application;
FIG. 11 is a schematic flowchart 2 of a communication method according to an embodiment of this application; and
FIG. 12 is a schematic flowchart 3 of a communication method according to an embodiment of this application.

### DESCRIPTION OF EMBODIMENTS

The following describes in detail embodiments of this application with reference to accompanying drawings.

Embodiments of this application may be applied to the field of terminal technologies, and may be specifically applied to a terminal device having a BeiDou short message communication service function. Implementation of a BeiDou-related technology and function may depend on a satellite, satellite networking, or the like, to implement communication, a service, and the like. Although development of ground communication technologies can meet requirements of a user in a large quantity of communication scenarios, full coverage of a ground communication network cannot be implemented. Therefore, in some areas in which a ground communication network does not exist or cannot exist, communication may be implemented based on a BeiDou technology, that is, a BeiDou short message communication service function. Communication may be implemented through the satellite or satellite networking by using this function.

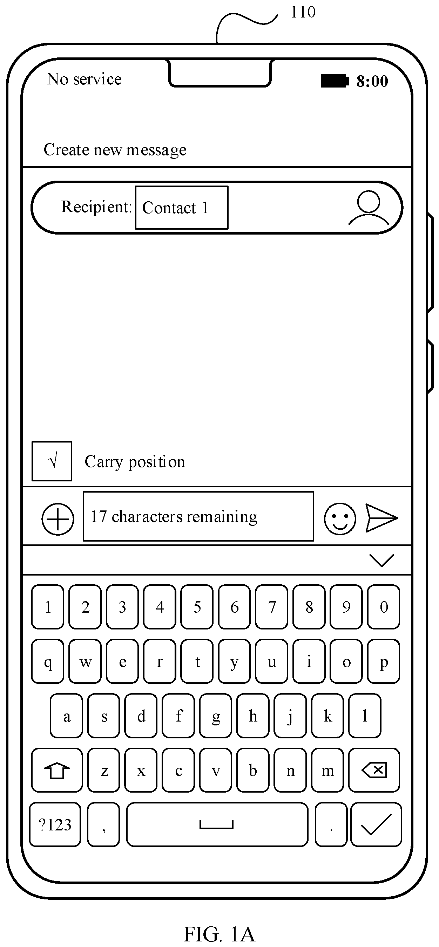

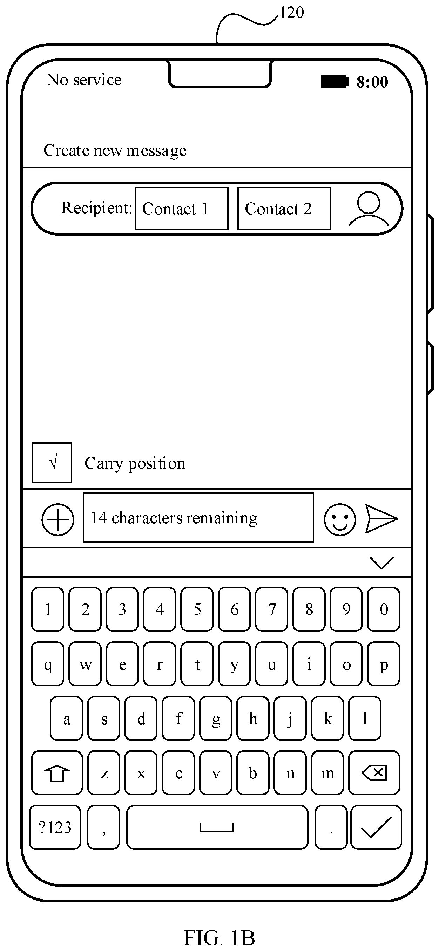

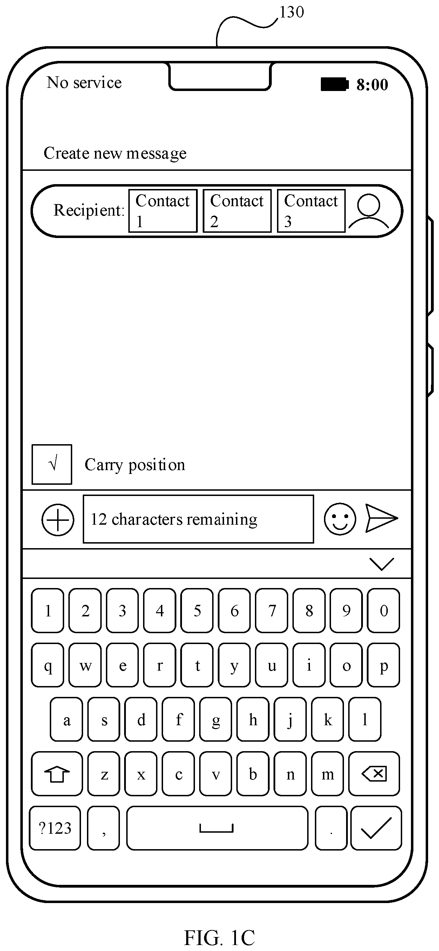

Due to a rate limitation on satellite uplink communication, a message capacity for sending and receiving messages through the satellite is currently limited to some extent. For example, in some implementations, a BeiDou short message can transmit a maximum of 400-bit (bit) content. In addition, a recipient number of the message, position information, and information content input by the user occupy a message capacity of the BeiDou short message. Therefore, there is a large limitation on information content that may be actually input by the user in the BeiDou short message. For example, FIG. 1A to FIG. 1C are a diagram of interfaces of a BeiDou short message. As shown on an interface 110 in FIG. 1A, in a scenario in which a message carrying position information is sent to a contact 1, a message header needs to occupy approximately 128 bits, and it may be understood that only 272 bits remain in the BeiDou short message to carry input text content defined by a user. Usually, one piece of Chinese character code occupies 2 bytes (bytes), that is, 16 bits. In this case, on the basis that 272 bits may be used to carry the text content, and each Chinese character occupies 16 bits, only 17 characters can be further input in the BeiDou short message sent by the user. As shown on an interface 120 in FIG. 1B, a scenario in which the message carrying the position information is sent to the contact 1 and a contact 2 is different from that on the interface 110 in that a contact method of a recipient is added, and the message header needs to occupy 37 bits more. It may be understood that only 235 bits remain in the BeiDou short message to carry the input text content defined by the user, and in this case, only 14 characters can be further input in the BeiDou short message sent by the user. Similarly, as shown on an interface 130 in FIG. 1C, if a contact 3 is further added, 198 bits remain in the BeiDou short message to carry the input text content defined by the user, and in this case, only 12 characters can be further input in the BeiDou short message sent by the user. By analogy, each time a contact is added, the input text content that may be defined by the user in the BeiDou short message becomes less. In this way, due to a limitation on a message capacity of the BeiDou short message, user experience is degraded, and the user may not be able to completely and effectively express a meaning through limited text content.

In view of this, embodiments of this application provide a communication method. In this method, a preset code manner is provided to implement mapping relationships between a plurality of pieces of common text information and preset code, so that a message capacity occupied by text content sent by a user can be reduced. In this way, according to this method, the user can send more text information to a recipient in the BeiDou short message, so that a meaning can be expressed more completely and accurately.

Embodiments of this application may be applied to a terminal device having a BeiDou short message communication service function, such as a mobile phone, a PC, a tablet computer, a wearable device (for example, a watch or a band), an in-vehicle device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or a smart home device (for example, a smart television or a smart speaker). It may be understood that a specific type of the terminal device is not limited in embodiments of this application.

An example embodiment of the terminal device to which embodiments of this application may be applied includes but is not limited to a terminal device that carries HarmonyOS^{®}, iOS^{®}, Android^{®}, Microsoft^{®}, or another operating system. Alternatively, the foregoing portable terminal device may be another portable terminal device, for example, a laptop (Laptop) with a touch-sensitive surface (for example, a touch panel).

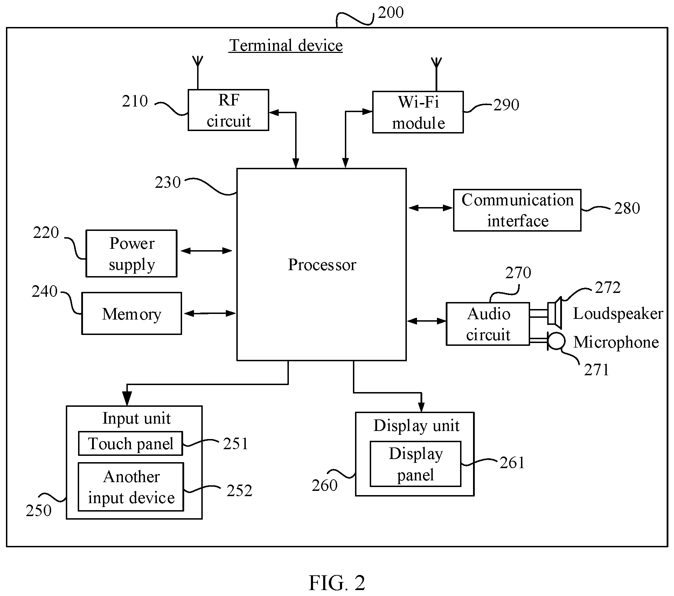

FIG. 2 is a diagram of a possible hardware structure of a terminal device. The terminal device 200 includes components such as a radio frequency (radio frequency, RF) circuit 210, a power supply 220, a processor 230, a memory 240, an input unit 250, a display unit 260, an audio circuit 270, a communication interface 280, and a wireless-fidelity (wireless-fidelity, Wi-Fi) module 290. A person skilled in the art may understand that the hardware structure of the terminal device 200 shown in FIG. 2 does not constitute a limitation on the terminal device 200. The terminal device 200 provided in this embodiment of this application may include more or fewer components than those shown in the figure, may combine two or more components, or may have a different component arrangement. The components shown in FIG. 2 may be implemented in hardware, software, or a combination of hardware and software including one or more signal processing and/or application-specific integrated circuits.

The following specifically describes components of the terminal device 200 with reference to FIG. 2.

The RF circuit 210 may be configured to receive and send data in a communication or call process. Specifically, after receiving downlink data from a base station, the RF circuit 210 sends the downlink data to the processor 230 for processing, and sends to-be-sent uplink data to the base station. Usually, the RF circuit 210 includes but is not limited to an antenna, at least one amplifier, a transceiver, a coupler, a low noise amplifier (low noise amplifier, LNA), a duplexer, and the like.

In addition, the RF circuit 210 may also communicate with another device through a wireless communication network. The wireless communication may use any communication standard or protocol, including but not limited to global system of mobile communication (global system of mobile communication, GSM), general message radio service (general message radio service, GPRS), code division multiple access (code division multiple access, CDMA), wideband code division multiple access (wideband code division multiple access, WCDMA), long term evolution (long term evolution, LTE), email, short messaging service (short messaging service, SMS), and the like.

The terminal device 200 can further implement a communication service and interact with another terminal device. Therefore, the terminal device 200 needs to have a data transmission function. That is, the terminal device 200 needs to include a communication module. Although FIG. 2 shows communication modules such as the RF circuit 210, the Wi-Fi module 290, and the communication interface 280, it may be understood that the terminal device 200 includes at least one of the foregoing components or another communication module (for example, a Bluetooth module) configured to implement communication, to transmit data.

For example, when the terminal device 200 is a mobile phone, the terminal device 200 may include the RF circuit 210, and may further include the Wi-Fi module 290, or may include the Bluetooth module (not shown in FIG. 2). When the terminal device 200 is a computer, the terminal device 200 may include the communication interface 280, and may further include the Wi-Fi module 290, or may include the Bluetooth module (not shown in FIG. 2). When the terminal device 200 is a tablet computer, the terminal device 200 may include the Wi-Fi module, or may include the Bluetooth module (not shown in FIG. 2).

A Wi-Fi technology is a short-distance wireless transmission technology. The terminal device 200 may be connected to an access point (access point, AP) by using the Wi-Fi module 290, to implement access to a data network. The Wi-Fi module 290 may be configured to receive and send data in a communication process.

The terminal device 200 may be physically connected to another device through the communication interface 280. Optionally, the communication interface 280 is connected to a communication interface of the another device through a cable, to implement data transmission between the terminal device 200 and the another device.

The memory 240 may be configured to store a software program and a module. The processor 230 runs the software program and the module stored in the memory 240, to perform various function applications and data processing of the terminal device 200. Optionally, the memory 240 may mainly include a program storage area and a data storage area. The program storage area may store an operating system (mainly including software programs or modules corresponding to a kernel layer, a system layer, an application framework layer, an application layer, and the like).

In addition, the memory 240 may include a high-speed random access memory, and may further include a non-volatile memory, for example, at least one magnetic disk storage device, a flash memory device, or another volatile solid-status storage device. In this embodiment of this application, the memory 240 may store computer program instructions used to implement the communication method provided in embodiments of this application, a preconfigured mapping relationship, and the like, for example, store a mapping relationship between common text information and preset code.

The input unit 250 may be configured to receive editing operations on a plurality of different types of data objects such as digit or character information input by a user, and generate key signal input related to user setting and function control of the terminal device 200. Optionally, the input unit 250 may include a touch panel 251 and another input device 252.

The touch panel 251, also referred to as a touchscreen, may collect a touch operation (for example, an operation of the user on the touch panel 251 or near the touch panel 251 by using any proper object or accessory such as a finger or a stylus) of the user on or near the touch panel, and drive a corresponding connection apparatus based on a preset program. In this embodiment of this application, the touch panel 251 may collect an operation of the user on a display panel 261, which may be, for example, a selection operation on preconfigured common text information included in an interface.

Optionally, the another input device 252 may include but is not limited to one or more of a physical keyboard, a function key (for example, a volume control button or a power on/off button), a tracking ball, a mouse, a joystick, and the like.

The display unit 260 may be configured to display information content input by the user, information content provided for the user, and various menus of the terminal device 200. The display unit 260 is a display system of the terminal device 200, and is configured to present an interface to implement human-computer interaction. The display unit 260 may include the display panel 261. Optionally, the display panel 261 may be configured in a form of liquid crystal display (liquid crystal display, LCD), organic light-emitting diode (organic light-emitting diode, OLED), or the like. In this embodiment of this application, the display unit 260 may be configured to display an interface for the user, so that the user can send a message, view a received message, or the like through the interface.

The processor 230 is a control center of the terminal device 200 and is connected to the components through various interfaces and lines. The processor 230 runs or executes the software program and/or the module stored in the memory 240, and invokes data stored in the memory 240, to perform various functions and data processing of the terminal device 200, and implement a plurality of services based on the terminal device 200. In this embodiment of this application, the processor 230 may be configured to implement the communication method provided in embodiments of this application.

The terminal device 200 further includes the power supply 220 (such as a battery) configured to supply power to the components. Optionally, the power supply 220 may be logically connected to the processor 230 by using a power management system, to implement functions such as charge management, discharge management, and power consumption management by using the power management system.

As shown in FIG. 2, the terminal device 200 further includes the audio circuit 270, a microphone 271, and a loudspeaker 272, and may provide an audio interface between the user and the terminal device 200. The audio circuit 270 may be configured to convert audio data into a signal that can be identified by the loudspeaker 272, and transmit the signal to the loudspeaker 272. The loudspeaker 272 converts the signal into a sound signal for output. The microphone 271 is configured to collect an external sound signal (for example, a sound of a person speaking, or another sound), convert the collected external sound signal into a signal that can be identified by the audio circuit 270, and send the signal to the audio circuit 270. The audio circuit 270 may be further configured to convert the signal sent by the microphone 271 into audio data, and then output the audio data to the RF circuit 210 for sending to, for example, another terminal device, or output the audio data to the memory 240 for subsequent processing.

Although not shown, the terminal device 200 may further include a camera, at least one sensor, and the like. Details are not described herein again. The at least one sensor may include but is not limited to a pressure sensor, a barometric pressure sensor, an acceleration sensor, a distance sensor, a fingerprint sensor, a touch sensor, a temperature sensor, and the like.

The operating system (operating system, OS) in this embodiment of this application is most basic system software running on the terminal device 200. A software system of the terminal device 200 may use a layered architecture, an event-driven architecture, a microkernel architecture, a micro service architecture, or a cloud architecture. In an embodiment of this application, an operating system using the layered architecture is used as an example to describe a software system architecture of the terminal device 200.

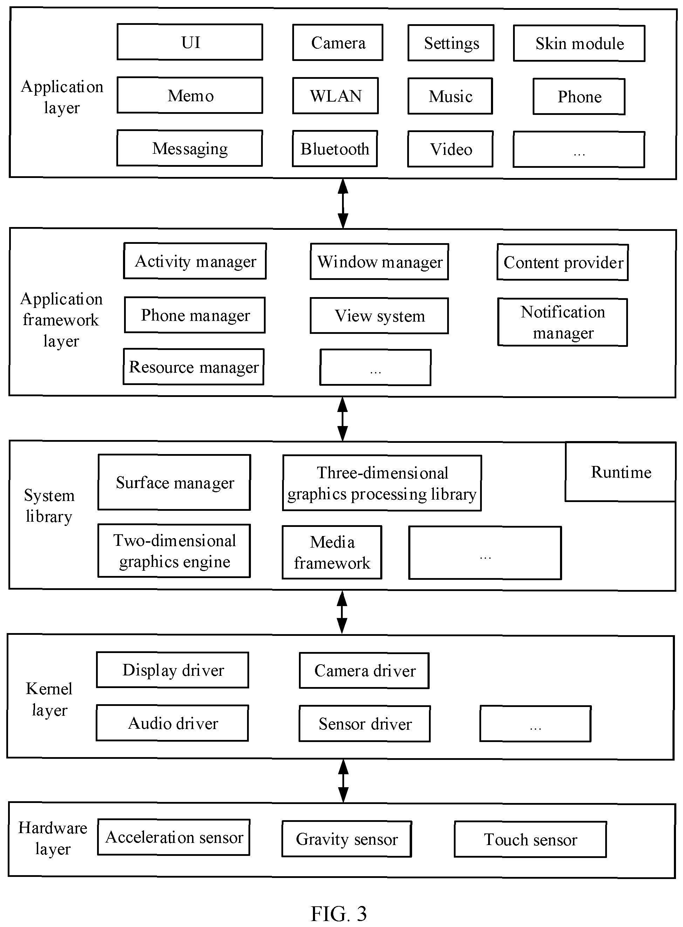

FIG. 3 is a block diagram of a software system architecture of a terminal device according to an embodiment of this application. As shown in FIG. 3, the software system architecture of the terminal device may be a layered architecture. For example, software may be divided into several layers, and each layer has a clear role and task. The layers communicate with each other through a software interface. In some embodiments, an operating system is divided into five layers: an application layer, an application framework (framework, FWK) layer, runtime and a system library, a kernel layer, and a hardware layer from top to bottom.

The application layer may include a series of application packages. As shown in FIG. 3, the application layer may include Camera, Settings, a skin module, a user interface (user interface, UI), third-party applications, and the like. The third-party applications may include a wireless local area network (wireless local area network, WLAN), Music, Phone, Bluetooth, Video, Memo, Messaging, and the like. In this embodiment of this application, attention may be paid to the messaging application (application, APP) that may be provided by the application layer, and message sending and receiving may be implemented through the messaging app. When the terminal device has no network service, a message may be sent in a form of BeiDou short message.

In a possible implementation, an application may be developed by using a Java language, and is completed by invoking an application programming interface (application programming interface, API) provided by the application framework layer. A developer may interact with a bottom layer (for example, the hardware layer and the kernel layer) of the operating system through the application framework layer, to develop an application of the developer. The application framework layer mainly includes a series of services and management systems of the operating system.

The application framework layer provides the application programming interface and a programming framework for the application at the application layer. The application framework layer includes some predefined functions. As shown in FIG. 3, the application framework layer may include an activity manager, a window manager, a content provider, a view system, a phone manager, a resource manager, a notification manager, and the like.

The activity manager is configured to manage a life cycle of each application, provide a common navigation rollback function, and provide an interactive interface for windows of all programs.

The window manager is configured to manage a window program. The window manager may obtain a size of a display, determine whether there is a status bar, perform screen locking, take a screenshot, and the like. The content provider is configured to store and obtain data, and enable the data to be accessed by an application. The data may include a video, an image, audio, calls that are made and answered, a browsing history and bookmarks, a phone book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the terminal device, for example, management of a call status (including answering, declining, or the like).

The resource manager provides various resources for an application, such as a localized character string, an icon, an image, a layout file, and a video file.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in the status bar at the top of the system in a form of graph or scroll bar text, such as a notification for an application running in the background, or a notification that appears on a screen in a form of dialog window. For example, text information is prompted in the status bar, an alert tone is made, the terminal device vibrates, or an indicator blinks.

The runtime includes a kernel library and a virtual machine. The runtime schedules and manages the operating system.

The kernel library includes two parts: a performance function that needs to be invoked by the Java language, and a kernel library of the operating system. The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media framework (media framework), a three-dimensional graphics processing library (for example, OpenGL ES), and a two-dimensional graphics engine (for example, SGL).

The surface manager is configured to manage a display subsystem and provide fusion of two-dimensional and 3D layers for a plurality of applications.

The media framework supports playback and recording in a plurality of common audio and video formats, static image files, and the like. The media framework may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for two-dimensional drawing.

In some embodiments, the three-dimensional graphics processing library may be configured to draw a three-dimensional motion trajectory image, and the two-dimensional graphics engine may be configured to draw a two-dimensional motion trajectory image.

The kernel layer is a layer between hardware and software. The kernel layer includes at least a display driver, a camera driver, an audio driver, and a sensor driver.

The hardware layer may include various sensors, such as an acceleration sensor, a gravity sensor, and a touch sensor.

Usually, a plurality of applications may run on the terminal device 200 at the same time. In a simple manner, one application may correspond to one process, and in a complex manner, one application may correspond to a plurality of processes. Each process has a process identifier (process ID).

It should be understood that "at least one of the following (items)" or a similar expression thereof in embodiments of this application means any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. "A plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects.

In addition, it should be understood that, in the descriptions of this application, terms such as "first" and "second" are merely used for distinguishing and description, cannot be understood as an indication or implication of relative importance, and cannot be understood as an indication or implication of a sequence.

It should be understood that the hardware structure of the terminal device may be shown in FIG. 2, and the software system architecture of the terminal device may be shown in FIG. 3. A software program and/or a module corresponding to the software system architecture of the terminal device may be stored in the memory 240. The processor 230 may run the software program and the application stored in the memory 240, to perform a procedure of the communication method provided in embodiments of this application.

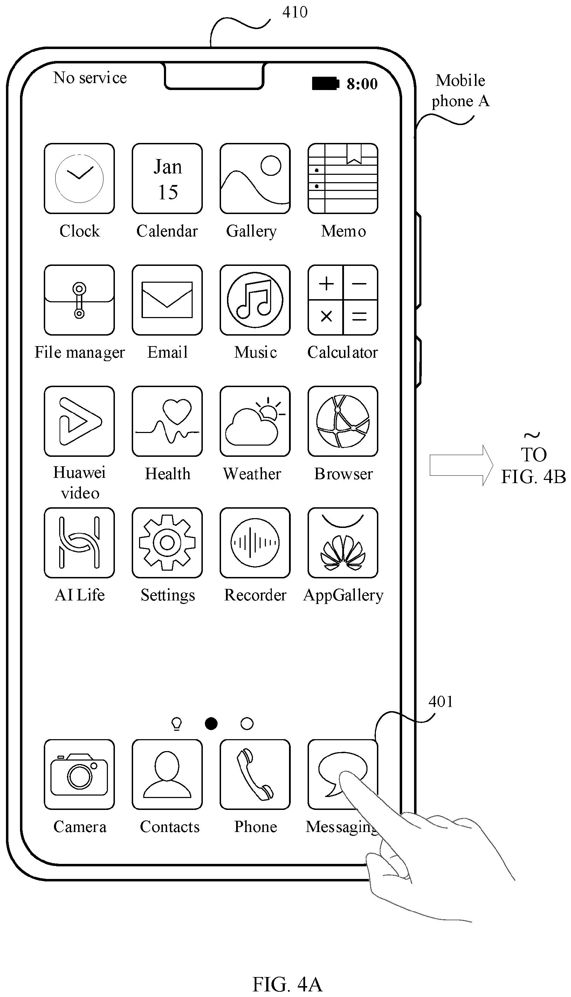

To facilitate understanding of the communication method provided in this application, the following describes an implementation process of the method provided in this application with reference to content shown in FIG. 4A to FIG. 12.

In the method provided in embodiments of this application, when the terminal device is at a position that cannot be covered by a ground communication network, if the terminal device has a BeiDou short message communication service function, the terminal device may send a message to a recipient in a form of BeiDou short message, so that the recipient can be notified of position information of the terminal device, an existing problem, and the like in time. In this way, a communication limitation in an extreme geographical environment can be overcome. For ease of understanding, the following uses a mobile phone as an example to first describe several possible application scenarios in which the method provided in embodiments of this application is used.

Scenario A: FIG. 4A to FIG. 4D are a diagram of interfaces of a communication method according to an embodiment of this application. An interface 410 in FIG. 4A shows a desktop interface of a mobile phone A. The desktop interface may include a plurality of apps installed on the mobile phone A, for example, a camera app, a phone app, and a messaging app, and may further include a top status bar. The status bar may include power, time information, and network status information. It can be learned from the interface 410 that current network status information of the mobile phone A is no service, and a user may be at a position without a ground communication network. In this scenario, the user may send a message to a recipient by using the messaging app and in a form of BeiDou short message. On the interface 410, the mobile phone A may display the interface 420 in response to an operation of the user on an icon 401 of the messaging app. The interface 420 may be an information editing interface included in the messaging app.

On the interface 420, the mobile phone A may receive but is not limited to the following operations: an operation of the user on a recipient editing box 402A to select a recipient Li Si, an operation triggered on a control 402B to select and carry position information, a trigger operation on a "quick help" control 402C, and the like. In addition, the interface 420 may further include a text box 402D, a keyboard 402E, and the like. The text box 402D may be used to display character content edited by the user, and the text box 402D may further display content used to prompt the user about an input character limit, for example, "17 characters remaining" shown on the interface 420. Then, the mobile phone A may display an interface 430 in response to the trigger operation on the "quick help" control 402C. The interface 430 may include but is not limited to a text label of preconfigured common text information. Optionally, when the common text information is preconfigured, the common text information may be further classified into different categories. For example, categories preconfigured on the interface 430 for quick help information may include but is not limited to an emergency category, a physical condition category, and the like. It can be learned from the interface 430 that the emergency category may include but is not limited to text labels such as 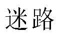 (lost), 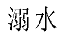 (drowning), and 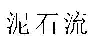 (mudslides), and the physical condition category may include but is not limited to text labels such as 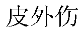 (skin injury) and 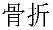 (fracture).

On the interface 430, the mobile phone A may receive a selection operation of the user on one or more text labels. For example, the text labels selected by the user may include 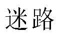 (lost) 403A and 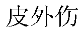 (skin injury) 403B. Optionally, in response to the selection operation of the user on the one or more text labels, the mobile phone A may further generate a message preview widget, and display the message preview widget, for example, a widget 403C on the interface 430, to the user. The message preview widget 403C may include the one or more text labels selected by the user on the interface 430, the position information of the mobile phone A, and the like. Then, on the interface 430, the mobile phone A may send, in response to an operation on a "directly send" control 403D, information content on the message preview widget 403C to the recipient Li Si in the form of BeiDou short message.

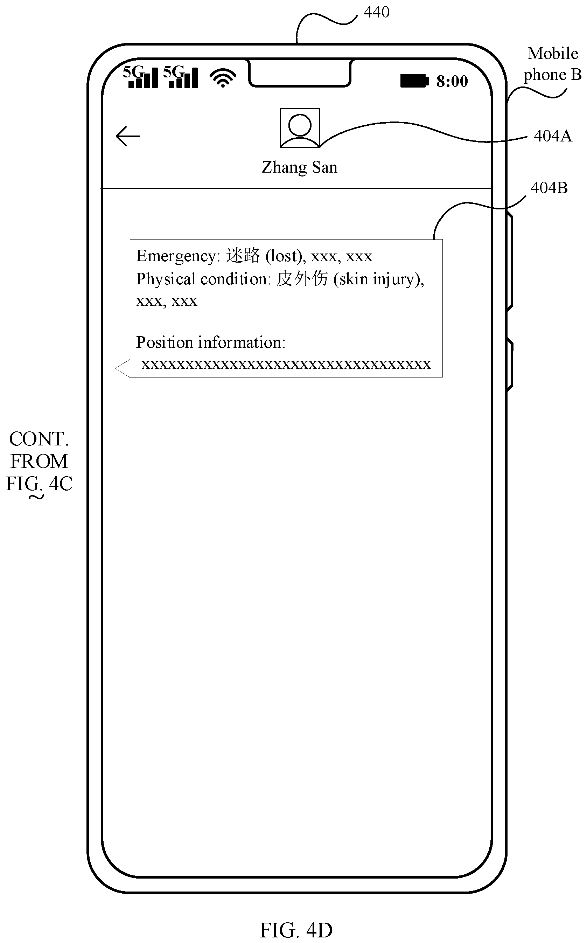

For example, an interface 440 in FIG. 4D may be a corresponding display interface existing when a mobile phone B receives the message, and the mobile phone B may be a mobile phone of the recipient Li Si. It can be learned from the interface 440 that, the mobile phone B may display an information interaction interface between the mobile phone B and a sender Zhang San 404A, and the interface may display information 404B. It may be understood that the information 404B is implemented by sending the message in the form of BeiDou short message. For specific content of the information 404B, refer to the interface 440. Details are not described herein again.

It can be learned from the scenario A shown in FIG. 4A to FIG. 4 that the preconfigured common text information is displayed on the interface 430, so that the user can select the one or more text labels of the common text information, and template-based information content can be generated. In this way, the preconfigured common text information may be mapped to preset code of a preset quantity of bits, so that byte space occupied by a character can be reduced, and more effective text content can be sent to the recipient. For example, the preset code of the preset quantity of bits may be 6-bit code, 7-bit code, or the like. This is different from a case in which two characters need to occupy 32 bits in that occupation of byte space can be reduced.

It should be noted that, in embodiments of this application, that a maximum quantity of bits of the BeiDou short message is limited to 400 bits is used as an example. In actual scenario implementation, the maximum quantity of bits of the BeiDou short message may alternatively be another value. It may be understood that a maximum quantity of characters displayed by the mobile phone A may be correspondingly adjusted based on the value set in an actual scenario. In addition, a display manner of each interface and a switching manner between interfaces that are described in FIG. 4A to FIG. 4D are merely possible examples, and this is not limited in this application. For example, the quick help interface may be an independent display interface, as shown on the interface 430. For another example, the quick help interface may alternatively be an interface included in the information editing interface. For example, in response to the operation on the "quick help" control 402C, the mobile phone A may alternatively display the quick help information and the like in an area that is of the interface 420 and that displays the keyboard 402E.

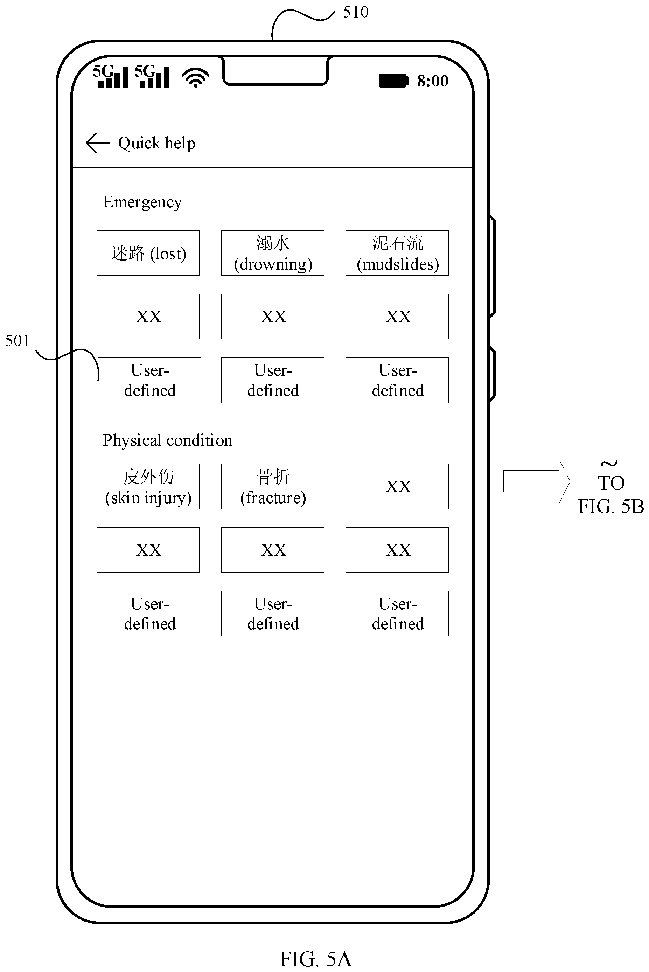

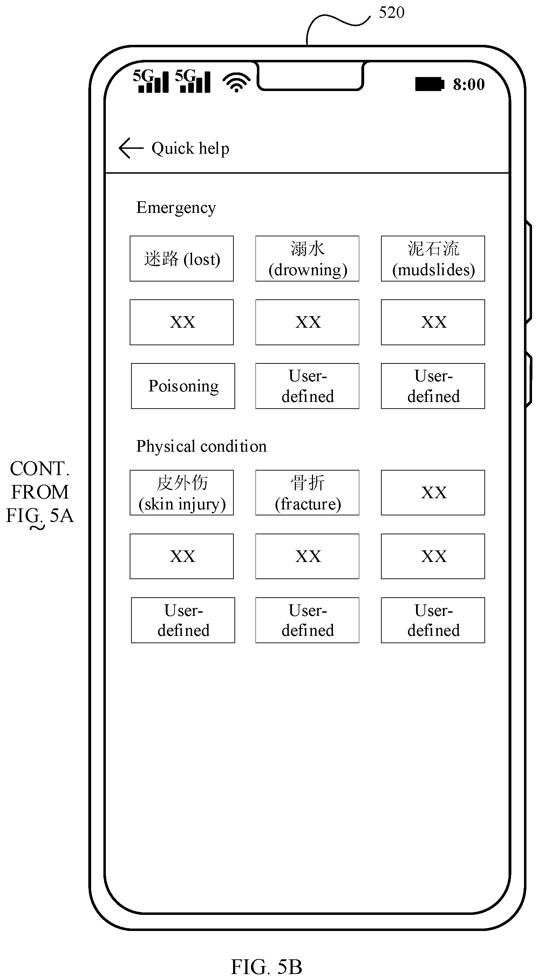

Scenario B: In an embodiment of this application, a user may further define common text information. FIG. 5A and FIG. 5B are another diagram of interfaces of a communication method according to an embodiment of this application. An interface 510 in FIG. 5A shows text labels including preconfigured common text information. For example, one or more user-defined labels that may be defined by a user may be further reserved on the interface 510. For example, a mobile phone A may receive an operation of the user on a user-defined label 501 included in the interface 510, and trigger, in response to the operation, the user-defined label 501 to be updated to an editable state. Then, the mobile phone A may receive and display an interface 520 in response to an editing operation of the user on the user-defined label 501. It can be learned from the interface 520 that the user may add " 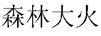 (forest fire)" as common text information at the user-defined label 501.

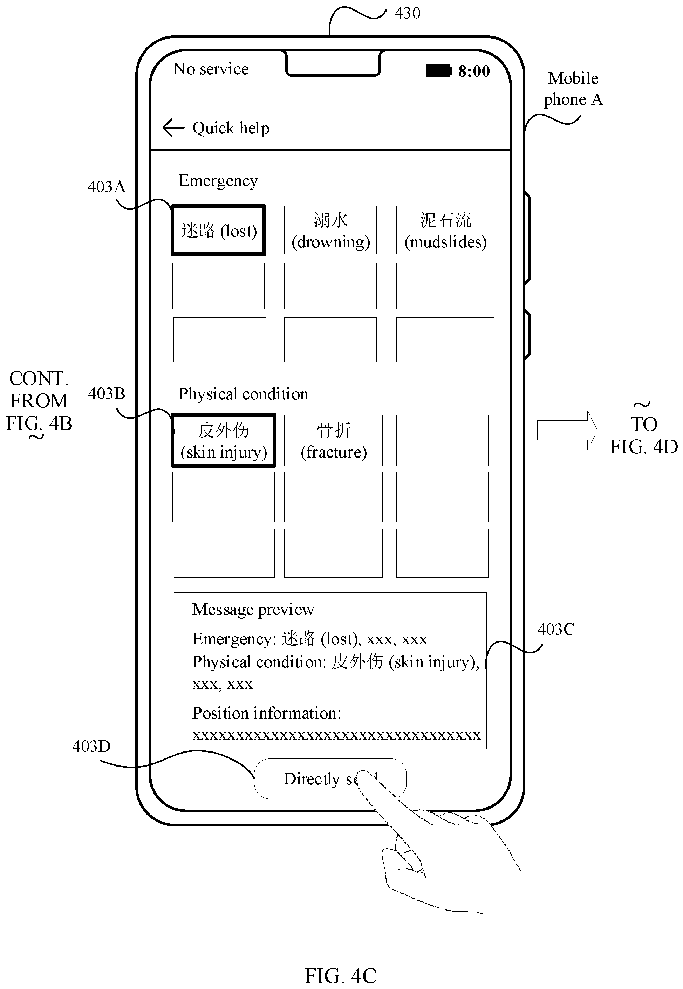

It should be noted that, when the mobile phone A is connected to a network, the user may define common text information, so that the user-defined label can be updated to a server. For example, before the scenario A, the mobile phone A implements the operations in the scenario B in a network-connected state. In this case, it may be understood that when the scenario A is implemented, the interface 430 in FIG. 4C may be displayed as the interface 510. In other words, when the scenario A is implemented, the user-defined " 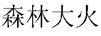 (forest fire)" text label may also be selected. In this way, the user defines the common text information, so that flexibility of configuring the common text information can be implemented, and more application scenarios can be satisfied.

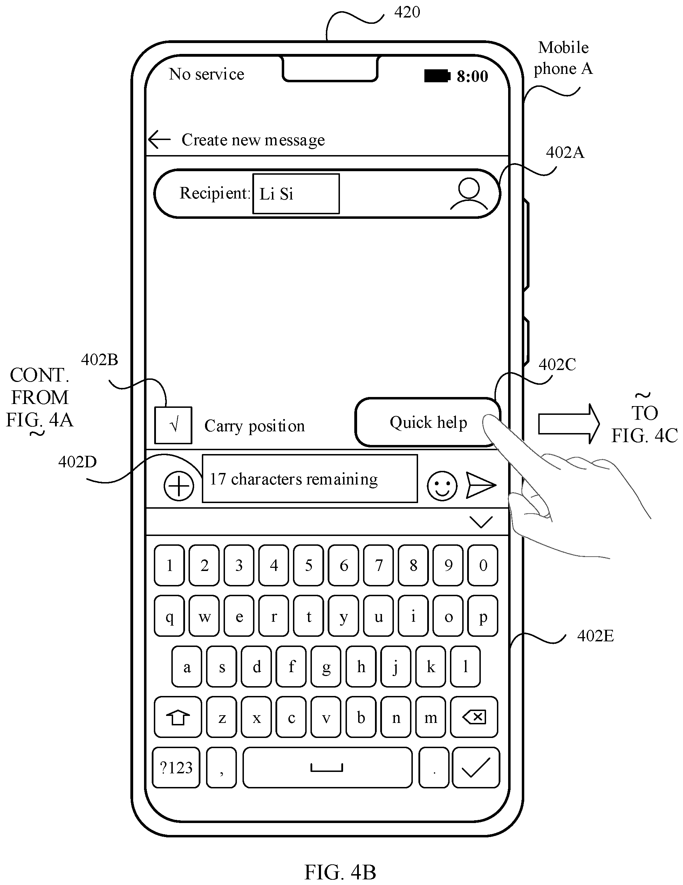

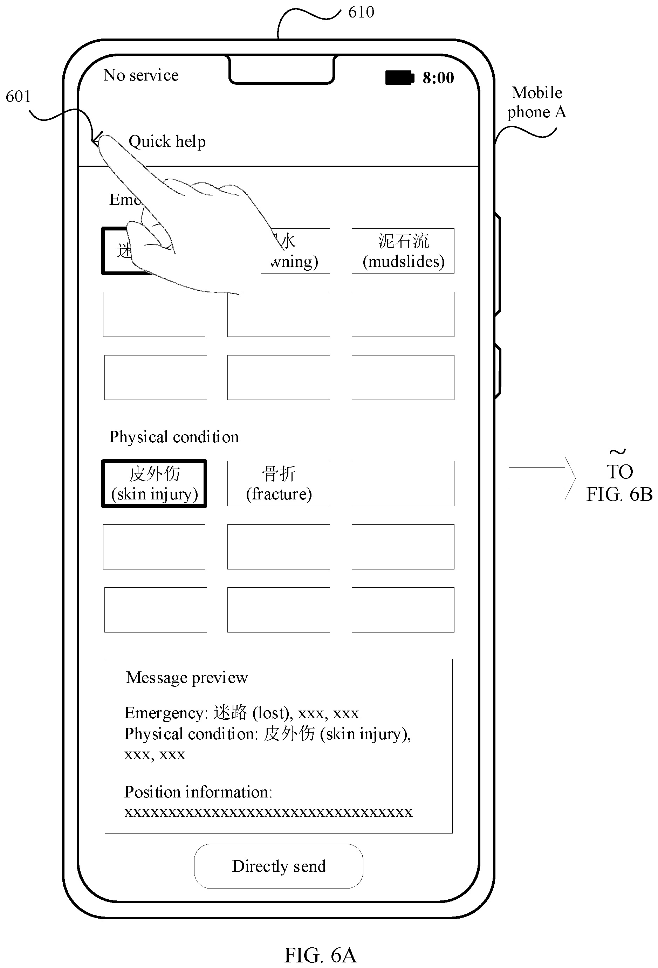

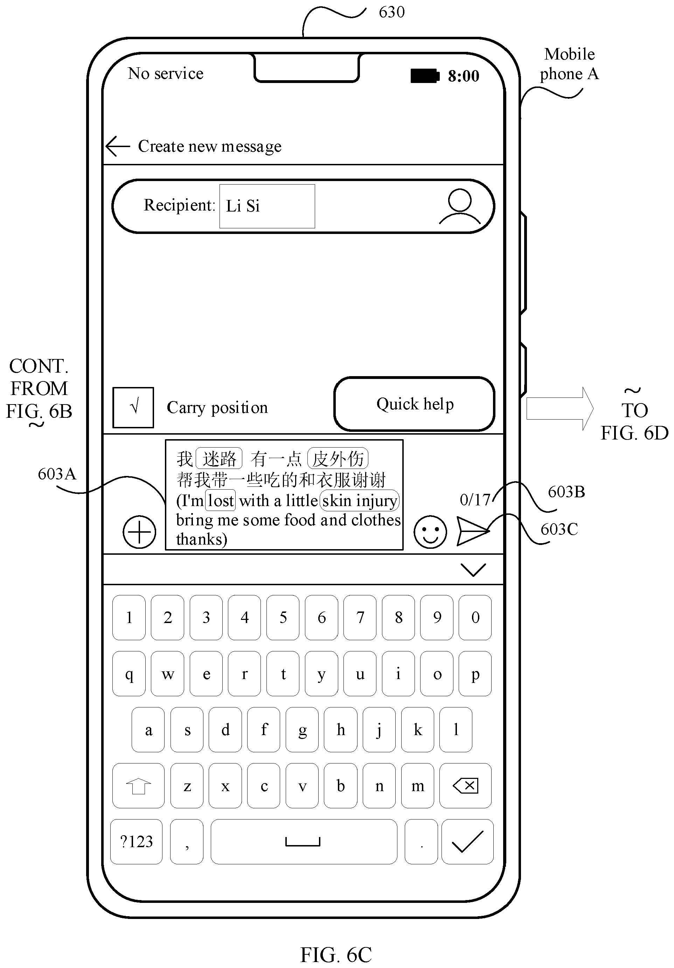

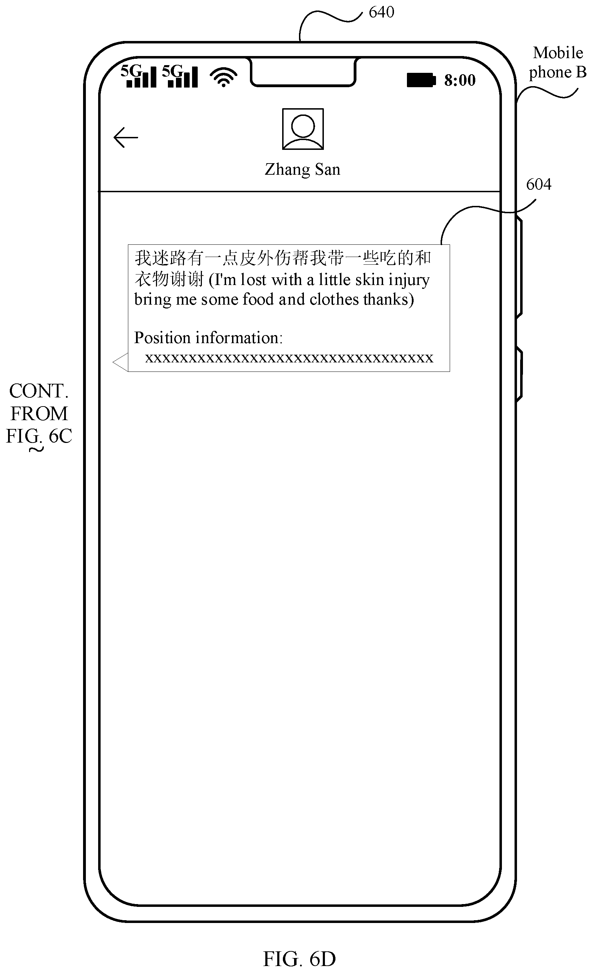

Scenario C: In addition to the template-based information content that can be generated as described in the scenario A, in another possible scenario, a user may further manually input some text content. FIG. 6A to FIG. 6D are still another diagram of interfaces of a communication method according to an embodiment of this application. In this scenario, an interface 610 in FIG. 6A is different from the interface 430 shown in FIG. 4C in that in addition to triggering an operation on a "directly send" control 403D in a quick help interface, a user may further trigger an operation on a return control 601. On the interface 610, a mobile phone A may display an interface 620 in response to an operation on the return control 601. The interface 620 may be understood as an interface displayed after the information editing interface 420 shown in FIG. 4B is updated. It can be learned from the interface 620 that a text box 602A may display a " 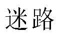 (lost)" text label and a " 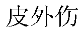 (skin injury)" text label that are selected by the user. In addition, the interface 620 may further include character prompt information 602B. The character prompt information 602B may be used to prompt the user about an input character limit and a quantity of remaining inputtable characters. For example, after the user selects the two text labels included in quick help information, the quantity of remaining inputtable characters is 16. It should be noted that, on the basis that in this embodiment of this application, a mapping relationship between each text label included in the quick help information and preset code may be preconfigured, 16-bit code may be used to include a plurality of text labels, so that more characters can be displayed. For example, when each text label is mapped to 6-bit preset code, the 16-bit code may include a maximum of two text labels, and 4 bits may remain. In this way, although the " 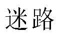 (lost)" text label and the " 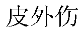 (skin injury)" text label shown on the interface 620 have a total of 5 characters (Chinese characters), the " 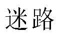 (lost)" text label and the " 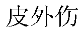 (skin injury)" text label may occupy byte space of only one piece of Chinese character code. In addition, a display form of the character prompt information 602B is not limited in this embodiment of this application. On the interface 620, the mobile phone A may respond to one or more characters input by the user in the text box 602A by using a keyboard and, for example, display an interface 630. It can be learned from a text box 603A included in the interface 630 that the user inputs 16 characters (Chinese characters). It may be understood that, in this case, character prompt information 603B on the interface 630 may be updated and displayed as "0/17", to indicate that a quantity of characters input at this time reaches a maximum quantity of characters. Preview information edited by the user may be " 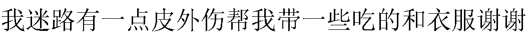 (I'm lost with a little skin injury bring me some food and clothes thanks)". Optionally, the text label in the text box may be correspondingly adjusted in response to a position at which the user edits a cursor. For example, when the cursor is before the " 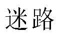 (lost)" text label, a character input by the user may be displayed before the " 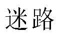 (lost)" text label, and a display position of the " 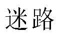 (lost)" text label is correspondingly moved. In addition, the mobile phone A may further receive a trigger operation of the user on the " 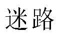 (lost)" text label included in the text box 603A, and may display, in response to the operation, the quick help information interface to the user again, so that the user switches to select another quick help text label.

On the interface 630, in response to a trigger operation of the user on a sending control 603C, the mobile phone A may send, to a recipient Li Si in a form of BeiDou short message, a message including information content displayed in the text box 603A, where position information is carried during sending of the message. For example, an interface 640 may be a corresponding display interface existing when a mobile phone B receives the message, and the mobile phone B may be a mobile phone of the recipient Li Si. It can be learned from the interface 640 that the interface may include information 604, and the information 604 includes character information input by the user in the text box 603A on the interface 630 and the position information of the mobile phone A.

Based on the content shown in the scenario C, the mobile phone A may implement flexible encoding based on common text information selected by the user and the character input by the user. In this way, preconfigured common text information may be mapped to preset code of a preset quantity of bits, so that byte space occupied by a character can be reduced, and more effective text content can be sent to the recipient. For example, the preset code of the preset quantity of bits may be 6-bit preset code, 7-bit preset code, or the like. This is different from a case in which two characters need to occupy 16 bits in that occupation of byte space can be reduced.

It should be noted that the scenario A to the scenario C are merely several possible scenarios described in embodiments of this application, and the scenarios may be further combined. A specific scenario is not limited in this application. In addition, the user operation related to the foregoing scenarios may be implemented in, but is not limited to, the following manners: a tap operation, a double-tap operation, a touch and hold operation, a voice instruction, or the like. During specific implementation, the user operation may be implemented based on a form configured by the terminal device.

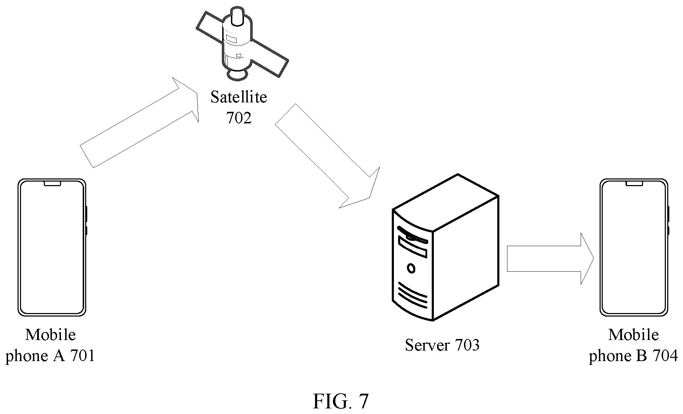

Based on the foregoing description of interface processing effect that can be achieved by using the method provided in embodiments of this application, the following describes an implementation process of the communication method provided in this application, to describe how to achieve the foregoing described interface processing effect shown in FIG. 4A to FIG. 6D by using the method provided in this application. This can help a user send more effective text content when sending a BeiDou short message, so that use requirements of the user in more scenarios can be met, and user experience can be improved. FIG. 7 is a diagram of a scenario of a communication method according to an embodiment of this application. The scenario may include, for example, a mobile phone A 701, a satellite 702, a server 703, and a mobile phone B 704. The mobile phone A 701 may be, for example, the mobile phone A of Zhang San described in the foregoing scenario A to scenario C, and may be configured to send information in a form of BeiDou short message in a network-disconnected state. The satellite 702 may be configured to receive the information sent by the mobile phone A 701 in the network-disconnected state, and send, based on a recipient of the information, the information to the server 703 corresponding to the recipient. The server 703 may be configured to receive the information from the satellite 702, and send the information to the mobile phone B 704. The mobile phone B 704 and the server 703 may have a communication connection with each other through a communication network. The network may be a local area network, a wide area network, or the like.

In some possible embodiments, a mapping relationship between preconfigured common text information and preset code may be stored in the mobile phone A 701 and the mobile phone B 704. In this example, the mobile phone A 701 may encode, based on the mapping relationship, one or more pieces of common text information selected by the user, and then send encoded one or more pieces of common text information in the form of BeiDou short message. After receiving the information from the mobile phone A 701, the mobile phone B 704 may decode the information based on the mapping relationship, and parse out the one or more pieces of common text information sent by the mobile phone A 701. The mapping relationship stored in the mobile phone B 704 and the mobile phone A 701 may be obtained from a cloud server, and may be preconfigured in the cloud server by a skilled person, or may be uploaded to the cloud server after being configured on any terminal device. This is not limited in this application.

In some other possible embodiments, the mapping relationship may alternatively be stored in the mobile phone A 701 and the server 703. In this example, after receiving the information that is sent by the satellite 702 and that is from the mobile phone A 701, the server 703 may decode the information based on the mapping relationship, to parse out the one or more pieces of common text information sent by the mobile phone A 701. Then, the server 703 may send parsed information content to the mobile phone B 704 through the communication network.

It should be noted that languages used by the mobile phone A 701 and the mobile phone B 704 are not limited in this embodiment of this application. For example, the mobile phone A 701 may use English, and the mobile phone B 704 may use Chinese. It may be understood that, after receiving the information from the mobile phone A 701, the mobile phone B 704 may display the information based on a language used by the mobile phone B 704. For example, although information content parsed out by the mobile phone B 704 is in an English form, when a language system of the mobile phone B 704 is Chinese, the mobile phone B 704 may convert the information content from English to Chinese for display.

In addition, the satellite 702 may be one satellite, or may be a satellite network including a plurality of satellites. This is not limited in this application. In addition, the server 703 may be one server, or may be a server cluster including a plurality of servers. This is also not limited in this application.

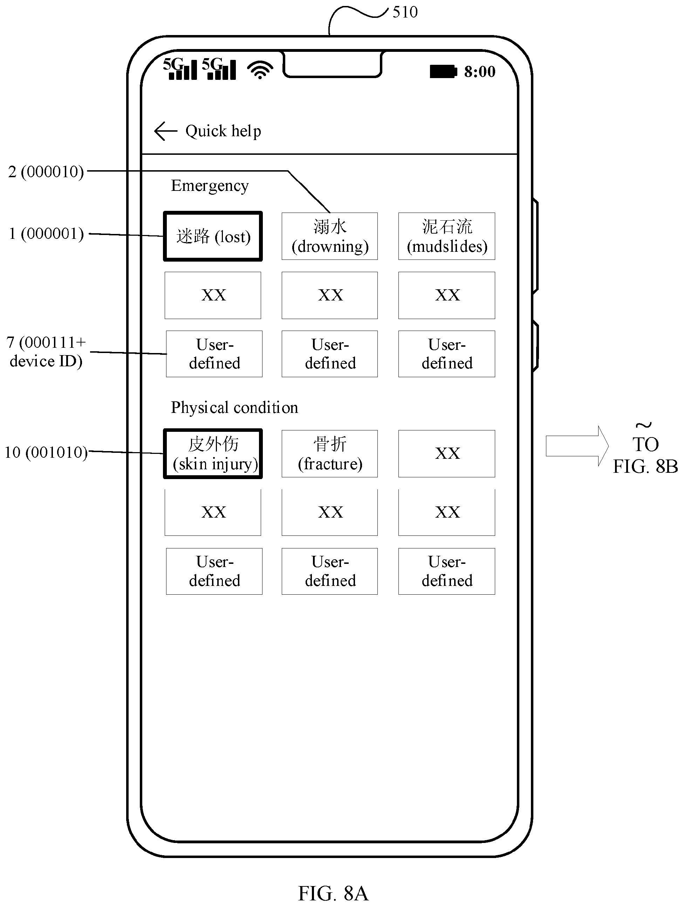

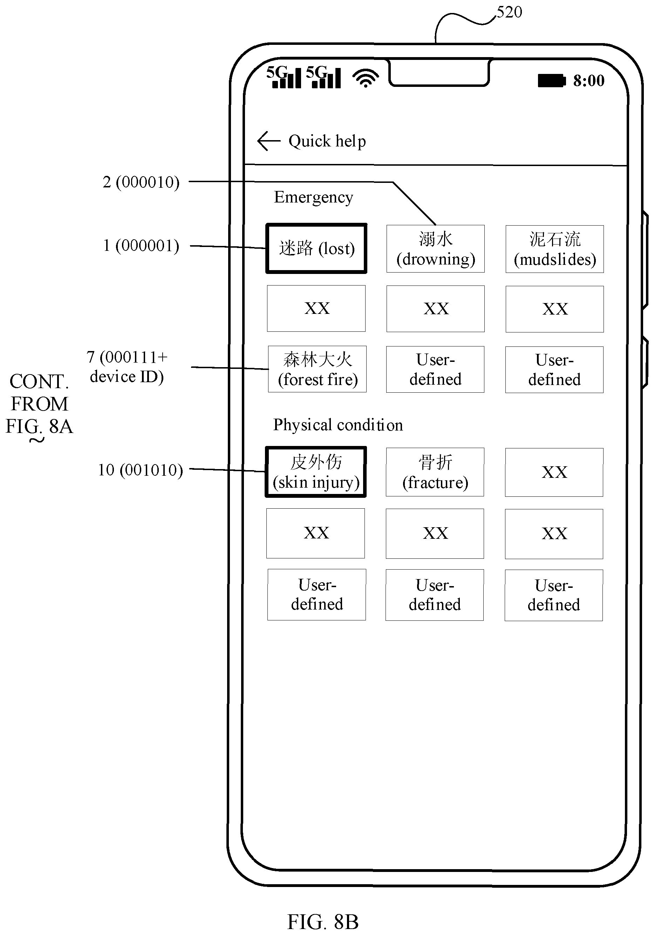

For ease of understanding, FIG. 8A and FIG. 8B are a correspondence diagram of a mapping relationship in a communication method according to an embodiment of this application. For example, 6-bit code is used for each piece of common text information. With reference to content shown on the interface 510 shown in FIG. 5A, code corresponding to a " 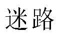 (lost)" text label may be 000001, code corresponding to a " 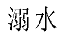 (drowning)" text label may be 000010, and code corresponding to a " 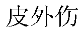 (skin injury)" text label may be 001010. For example, with reference to the content described in the foregoing scenario A, when common text information selected by a user on the interface 510 is the " 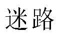 (lost)" text label and the " 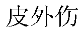 (skin injury)" text label, code of encoded information sent by a mobile phone A 701 may include (000001 001010), and a mobile phone B 704 may decode (000001 001010) included in received information as " 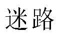 (lost)" and " 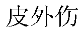 (skin injury)".

For another example, based on the content described in the foregoing scenario B, the user may add a user-defined note at a user-defined label preset on the interface 510. For example, a user-defined label added at a seventh text label is " 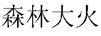 (forest fire)". Each text label shown on the interface 510 has code that the text label may be mapped to. For example, although the seventh text label to a ninth text label shown in an emergency category on the interface 510 are text labels allowed to be defined by the user, the text labels also have corresponding code that the text labels may be mapped to. In this way, when the user updates the user-defined label to a text label with substantive content, a mapping relationship may be updated to a mapping relationship between preset code and the text label with the substantive content, for example, a mapping relationship between code (000111) and " 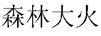 (forest fire)".

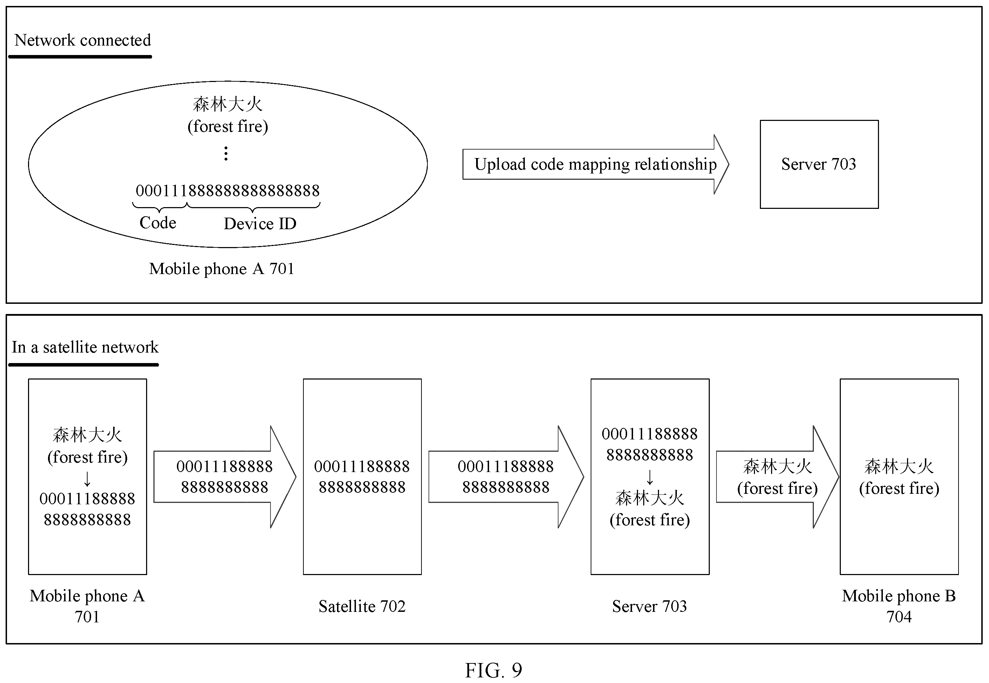

In some possible scenarios, an application scope of the user-defined text label is limited. For example, the user-defined text label is applicable to only a current terminal device. In this scenario, mapping content of code may be alternatively determined by using a device ID. For example, FIG. 9 is another diagram of a scenario of a communication method according to an embodiment of this application. For example, when a mobile phone A 701 is connected to a network, a mapping relationship between a user-defined label " 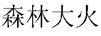 (forest fire)" and corresponding preset code may be uploaded to a server 703, and the mobile phone A 701 may also store the mapping relationship. Considering that " 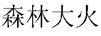 (forest fire)" is a user-defined label, in addition to (000111), the corresponding code may further include a device ID (888888888888888). That is, the code corresponding to " 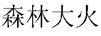 (forest fire)" may be (000111888888888888888), to distinguish that the " 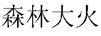 (forest fire)" text label is a user-defined label of the mobile phone A 701. The mapping relationship based on the user-defined label is uploaded to the server 703. When the mobile phone A 701 is in a satellite network, which may also be understood as a scenario in which the mobile phone A 701 is not connected to a ground communication network, when a user selects the " 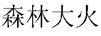 (forest fire)" text label, the mobile phone A 701 may encode " 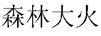 (forest fire)" based on the mapping relationship, to obtain encoded information. Then, the mobile phone A 701 sends the encoded information to a satellite 702 in a form of BeiDou short message. After receiving the encoded information, the satellite 702 may send the encoded information to the server 703. After receiving the encoded information, the server 703 may decode the encoded information based on the mapping relationship, to obtain information content of " 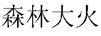 (forest fire)", and send " 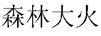 (forest fire)" to a mobile phone B 704, so that information can be displayed on the mobile phone B 704.

In addition, FIG. 9 describes only a transmission process of the encoded information. During actual transmission, the encoded information may be carried in a message for transmission. Recipient information and position information of the mobile phone A 701 may be carried in a message header, and the encoded information may be carried in a payload of the message. Specific implementation content of the message is not described in detail in this application.

It may be understood that if each piece of common text information is mapped to 6-bit binary code, there may be 64 pieces of preconfigured common text information. When more amount of common text information needs to be configured, the common text information may be mapped to binary code that occupies more character space, such as 7-bit binary code. It may be understood that, in a scenario in which a small amount of common text information needs to be configured, the common text information may alternatively be mapped to binary code that occupies less character space, for example, 5-bit binary code. A mapping relationship is not limited in embodiments of this application.

In the method provided in embodiments of this application, based on a preconfigured mapping relationship, a common character can be mapped to code that occupies less character space. In this way, the character space occupied by the code is less than character space occupied by the character, so that more effective information content can be transmitted in a limited BeiDou short message. According to the method, more application scenarios can be extended, and a use limitation on sending the BeiDou short message by a user can be reduced, so that user experience can be improved.

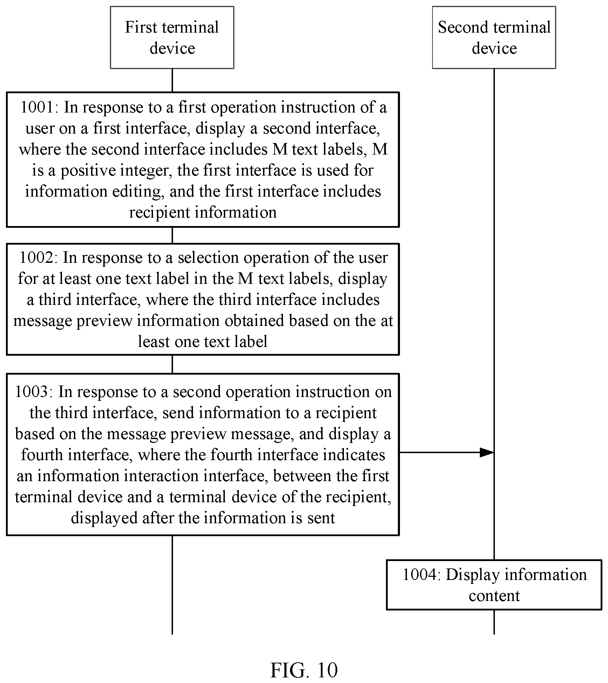

Based on the content described in the foregoing embodiments, FIG. 10 is a schematic flowchart of a communication method according to an embodiment of this application. A procedure of the method may include the following steps.

Step 1001: In response to a first operation instruction of a user on a first interface, a first terminal device displays a second interface, where the second interface includes M text labels, M is a positive integer, the first interface is used for information editing, and the first interface includes recipient information. The first terminal device is, for example, the mobile phone A described in the foregoing embodiments. The first interface may be, for example, the interface 420 described in FIG. 4B, the first operation instruction may be a touch operation on the "quick help" control 402C, and the second interface may be, for example, the interface 430 described in FIG. 4C. The M text labels include, for example, the " 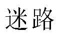 (lost)" text label, the " 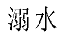 (drowning)" text label, and the like that are shown on the interface 430.

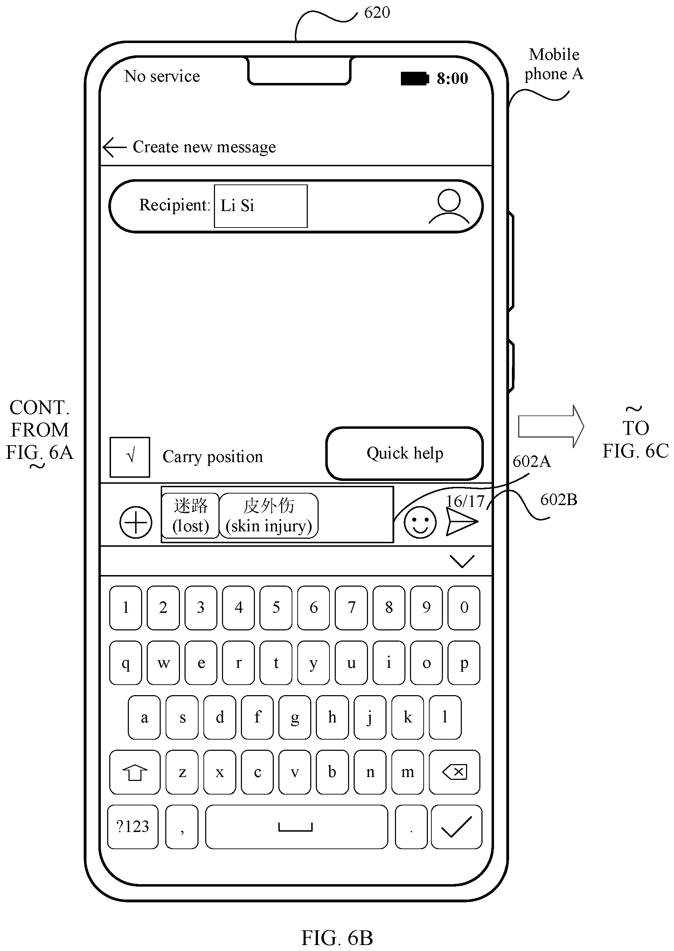

Step 1002: In response to a selection operation of the user for at least one text label in the M text labels, the first terminal device displays a third interface, where the third interface includes message preview information obtained based on the at least one text label. For example, the third interface may be the widget 403C on the interface 430 shown in FIG. 4C, or may be the text box 602A on the interface 620 shown in FIG. 6B. This is not limited in this application.

Step 1003: In response to a second operation instruction on the third interface, the first terminal device sends information to a recipient based on the message preview message, and displays a fourth interface, where the fourth interface indicates an information interaction interface, between the first terminal device and a terminal device of the recipient, displayed after the information is sent. The second operation instruction may be, for example, a touch operation on the "directly send" control 403D shown on the interface 430 in FIG. 4C, or may be a touch operation on the control 602B shown on the interface 620 in FIG. 6B. The fourth interface may be, for example, an information interaction interface, between the mobile phone A and the recipient, displayed after the mobile phone A sends the information.

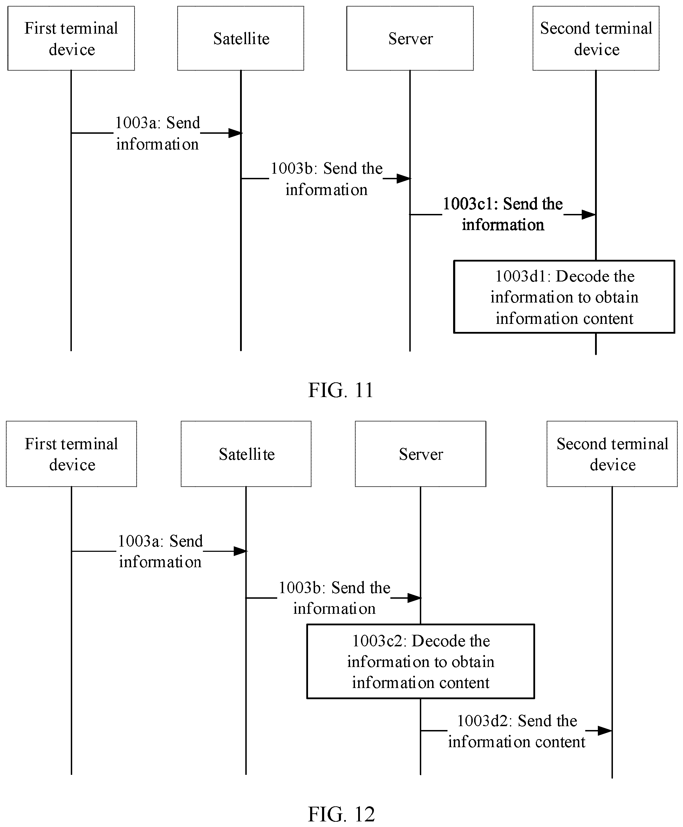

In a possible implementation, the first terminal device may send the information to a second terminal device of the recipient through a satellite and a server, and the second terminal device decodes the information. The second terminal device is, for example, the mobile phone B described in the foregoing embodiments. FIG. 11 is another schematic flowchart of a communication method according to an embodiment of this application. A procedure may include the following steps.

Step 1003a: A first terminal device sends information to a satellite.

Step 1003b: The satellite sends the information to a server corresponding to a recipient.

Step 1003c1: The server sends the information to a second terminal device of the recipient.

Step 1003d1: The second terminal device decodes the information to obtain information content. It may be understood that the information sent by the first terminal device is encoded information, and is forwarded by the satellite and the server. After receiving the encoded information, the second terminal device may decode the information to obtain the substantive information content.

In another possible implementation, the first terminal device may send the information to the second terminal device of the recipient through the satellite and the server, and the server decodes the information. FIG. 12 is still another schematic flowchart of a communication method according to an embodiment of this application. A procedure may include the following steps.

Step 1003a: A first terminal device sends information to a satellite.

Step 1003b: The satellite sends the information to a server corresponding to a recipient.

Step 1003a and step 1003b are similar to the procedure shown in FIG. 11.

Step 1003c2: The server decodes the information to obtain information content, and sends the information content to a second terminal device of the recipient. It may be understood that the information sent by the first terminal device is encoded information, and is forwarded by the satellite. After receiving the encoded information, the server may decode the information to obtain the substantive information content, and then send the substantive information content to the second terminal device of the recipient. In this way, an increase in processing pressure and storage pressure of the second terminal device can be avoided.

Step 1003d2: The second terminal device obtains the information content.

Step 1004: The second terminal device displays the information content.

Based on the foregoing embodiments, this application further provides a terminal device. The terminal device includes a plurality of functional modules. The plurality of functional modules interact with each other to implement functions performed by a terminal device in the methods described in embodiments of this application. The plurality of functional modules may be implemented based on software, hardware, or a combination of software and hardware, and the plurality of functional modules may be randomly combined or divided based on specific implementation. For example, steps 1001 to 1003 performed by the first terminal device in the embodiment shown in FIG. 10 are performed. Alternatively, step 1004 performed by the second terminal device in the embodiment shown in FIG. 10 may be performed.

Based on the foregoing embodiments, this application further provides a terminal device. The terminal device includes at least one processor and at least one memory. The at least one memory stores computer program instructions. When the terminal device runs, the at least one processor performs functions performed by a terminal device in the methods described in embodiments of this application. For example, steps 1001 to 1003 performed by the first terminal device in the embodiment shown in FIG. 10 are performed. Alternatively, step 1004 performed by the second terminal device in the embodiment shown in FIG. 10 may be performed.

Based on the foregoing embodiments, this application further provides a computer program product. The computer program product includes a computer program (which may also be referred to as code or instructions). When the computer program is run, a computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete device. A person skilled in the art should understand that embodiments of this application may be provided as a method, a system, or a computer program product. Therefore, this application may use a form of hardware-only embodiment, software-only embodiment, or embodiment with a combination of software and hardware. In addition, this application may use a form of computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

The computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the claims of this application and their equivalent technologies.

## Claims

1. A communication method, applied to a first terminal device, wherein the first terminal device has no network service, and the method comprises:
in response to a first operation instruction of a user on a first interface, displaying a second interface, wherein the second interface comprises M text labels, M is a positive integer, the first interface is used for information editing, and the first interface comprises recipient information;
in response to a selection operation of the user for at least one text label in the M text labels, displaying a third interface, wherein the third interface comprises message preview information obtained based on the at least one text label; and
in response to a second operation instruction on the third interface, sending information to a recipient based on the message preview information, and displaying a fourth interface, wherein the fourth interface indicates an information interaction interface, between the first terminal device and the recipient, displayed after the information is sent.

2. The method according to claim 1, wherein the first interface further comprises a first control, and the first operation instruction indicates a touch operation of the user on the first control; and
the first operation instruction is used for switching from displaying the first interface to displaying the second interface; or
the first operation instruction is used for displaying the second interface in a preset display area on the first interface.

3. The method according to claim 1 or 2, wherein the first interface further comprises a second control, and the second control indicates that when the second control is selected for displaying, the information carries position information of the first terminal device.

4. The method according to any one of claims 1 to 3, wherein the sending information to the recipient based on the message preview information comprises:
searching a stored mapping relationship for preset code corresponding to the at least one text label, wherein the mapping relationship indicates preset code corresponding to the M text labels; and
encoding the information based on the preset code, and sending encoded information to the recipient.

5. The method according to claim 4, wherein the method further comprises:
detecting a third operation instruction for a user-defined label comprised in the second interface, wherein the third operation instruction indicates that the user edits the user-defined label; and
in response to the third operation instruction, displaying the user-defined label as an edited text label, and updating a first mapping relationship to a second mapping relationship, wherein the first mapping relationship indicates a correspondence between the user-defined label and first preset code, the second mapping relationship indicates a correspondence between the edited text label and second preset code, and the second preset code comprises the first preset code and device identifier code of the first terminal device.

6. The method according to claim 5, wherein the method further comprises:
when the first terminal device has a network service, uploading the second mapping relationship to a server.

7. The method according to any one of claims 1 to 6, wherein the message preview information is displayed through a widget or a text box.

8. The method according to any one of claims 1 to 7, wherein the information is sent, in a form of BeiDou short message through a satellite, to a second terminal device bound to the recipient information.

9. The method according to any one of claims 1 to 8, wherein the third interface further comprises character prompt information, and the character prompt information indicates a quantity of remaining inputtable characters; and
text content comprised in the at least one text label has a first quantity of characters, and occupies character space of a second quantity of characters in the information, wherein the first quantity of characters is greater than the second quantity of characters; and
the method further comprises:
in response to the selection operation, updating the character prompt information.

10. A communication system, wherein the system comprises a first terminal device, a satellite, a server, and a second terminal device;
the first terminal device is configured to encode information edited by a user, and send encoded information to the satellite, wherein the information edited by the user comprises recipient information and at least one text label selected by the user from M text labels displayed by the first terminal device, and M is a positive integer;
the satellite is configured to receive the encoded information from the first terminal device, and send the encoded information based on the recipient information indicated in the encoded information;
the server is configured to receive the encoded information from the satellite, decode the encoded information, and send the decoded information content to the second terminal device; or the server is configured to receive the encoded information from the satellite, and send the encoded information to the second terminal device based on the recipient information indicated in the encoded information, wherein the second terminal device is a terminal device bound to the recipient information; and
the second terminal device is configured to: when receiving the information content from the server, display the information content; or when receiving the encoded information from the server, decode the encoded information, and display the decoded information content.

11. A terminal device, comprising at least one processor, wherein the at least one processor is coupled to at least one memory, and the at least one processor is configured to read a computer program stored in the at least one memory, to perform the method according to any one of claims 1 to 9.

12. A computer-readable storage medium, wherein the computer-readable storage medium stores instructions; and when the instructions are run on a computer, the computer is enabled to perform the method according to any one of claims 1 to 9.

13. A computer program product comprising instructions, wherein when the computer program product is run on a computer, the computer is enabled to perform the method according to any one of claims 1 to 9.
